(19) 

**Europäisches Patentamt**
**European Patent Office**
**Office européen des brevets**

(11) **EP 4 492 234 A1**

(12) **EUROPEAN PATENT APPLICATION**

(43) Date of publication:
**15.01.2025 Bulletin 2025/03**

(21) Application number: **24184709.4**

(22) Date of filing: **26.06.2024**

(51) International Patent Classification (IPC):
*G06F 9/48* (2006.01)          *G06F 9/54* (2006.01)
*H04L 69/28* (2022.01)

(52) Cooperative Patent Classification (CPC):
**G06F 9/4806; G06F 9/4825; G06F 9/4837;
G06F 9/542; H04L 69/28**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 FI 20235780**

(71) Applicant: **Nokia Solutions and Networks Oy
02610 Espoo (FI)**

(72) Inventors:
- **BAHADORI, Milad**
  **Helsinki (FI)**
- **DEGTEV, Nikolay**
  **Espoo (FI)**

(74) Representative: **Nokia EPO representatives
Nokia Technologies Oy
Karakaari 7
02610 Espoo (FI)**

(54) **SINGLE-SHOT TIMING EVENTS**

(57)    Event lists for single-shot timing events in a timer pool are accessed by accessing a first level look-up table (123-1) having pointers (1-1) to second level look-up tables (123-2), which in turn have pointers (1-2) to event lists (123-2), an event list comprising timing events having the same expiration time.

FIG.1

EP 4 492 234 A1

**Description**

TECHNICAL FIELD

Various example embodiments relate to wireless communications.

BACKGROUND

Wireless communication systems are under constant development. For example, network functions are increasingly implemented as virtualized network functions, in which the network functions are separated from hardware they run on by using virtual hardware abstraction implemented on hardware, for example computing platforms, for example. To further increase performance, offloading may be used.

SUMMARY

The independent claims define the scope, and different embodiments are defined in dependent claims.

According to an aspect there is provided an apparatus for managing timer pools and single-shot timing events within the timer pools, the apparatus comprising at least: means for accessing first level look-up-tables, a first level look-up table per a timer pool, the first level look-up table comprising for the timer pool a plurality of rows for first pointers to second level look-up tables; means for accessing, using the first pointers, the second level look-up tables, a second level look-up table comprising M or less rows for second pointers to event lists with expiration times, wherein an event list is associated with one expiration time, and comprises a plurality of single-shot timing events scheduled at the corresponding expiration time; and means for accessing, using the second pointers, the event lists to add or cancel single-shot timing events in the event lists.

In at least some embodiments, the apparatus further comprises at least: means for receiving timer pool configuration information for one or more timer pools; means for determining, per a timer pool, based at least on configuration information received for the timer pool, parameter values for the timer pool, the parameter values including L, which is a maximum number of possible expiration times whose value is based on maximum timeout and resolution of the timer pool, N, which is a number of rows for first pointers in a first level look-up table for the timer pool, and M, wherein L, N and M are positive integers and L=MN; means for allocating from a memory, per a timer pool, memory space for a first level table with the N rows; and means for initializing, per a first level look-up table, second level look-up tables with M or less rows and event lists for the expiration times, an event list per an expiration time.

In at least some embodiments, the apparatus further comprises at least means for adding single-shot timing events to event lists using pointers in the first level tables and pointers in the second level look-up tables.

In at least some embodiments, the apparatus further comprises at least means for cancelling single-shot timing events from event lists using pointers in the first level tables and pointers in the second level look-up tables.

In at least some embodiments, the apparatus further comprises at least: means for receiving requests to add or cancel single-shot timing events, a request indicating a timer pool, a timing event and an expiration time; means for estimating, per a request, whether there is time to perform the request before the expiration time is met; and means for determining to perform the request when there is time to perform the request and not to perform the request when there is no time to perform the request.

In at least some embodiments, the apparatus further comprises at least means for uploading single-shot timing events from the event lists to processing queues, when an expiration time of the event list is met.

In at least some embodiments, the pointers are buffer pointers and the apparatus further comprises at least: means for allocating buffer pointers; and means for deallocating buffer pointers.

In at least some embodiments, the apparatus comprising at least one chip configured to provide said means.

In at least some embodiments, the first level look-up tables, the second level look-up tables and the expiration lists are stored to a memory that is external to said at least one chip.

In at least some embodiments, the apparatus comprises at least one processor, and at least one memory storing instructions that, when executed by the at least one processor, provide the means.

According to an aspect there is provided a method for managing timer pools and single-shot timing events within the timer pools, the method comprising: accessing first level look-up-tables, a first level look-up table per a timer pool, the first level look-up table comprising for the timer pool a plurality of rows for pointers to second level look-up tables, wherein N is a positive integer whose value is based on maximum timeout and resolution of the timer pool; accessing the second level look-up tables, a second level look-up table comprising M or less rows for pointers to event lists with expiration times, wherein an event list is associated with one expiration time, and comprises a plurality of single-shot timing events scheduled at the corresponding expiration time; and accessing the event lists to add or cancel single-shot timing events in the event lists.

In at least some embodiments, the method further comprises: receiving timer pool configuration information for one or more timer pools; determining, per a timer pool, based at least on configuration information received for the timer pool, parameter values for the timer pool, the parameter values including N, which is a number of rows for first pointers in a first level look-up table for the timer pool, L, which is a maximum number of possible expiration times, and M, wherein N, L and M are positive integers and $L=MN$; allocating from a memory, per a timer pool, memory space for a first level table with the N rows; and initializing, per a first level look-up table, second level look-up tables with M or less rows and event lists for the expiration times, an event list per an expiration time.

In at least some embodiments, the method further comprises: receiving requests to add or cancel single-shot timing events, a request indicating a timer pool, a timing event and an expiration time; using pointers in the first level tables and pointers in the second level look-up tables to add or cancel single-shot timing events in the event lists.

According to an aspect there is provided a computer readable medium comprising instructions stored thereon for performing at least the following to manage timer pools and single-shot timing events within the timer pools: accessing first level look-up-tables, a first level look-up table per a timer pool, the first level look-up table comprising for the timer pool a plurality of rows for pointers to second level look-up tables; accessing the second level look-up tables, a second level look-up table comprising M or less rows for pointers to event lists with expiration times, wherein an event list is associated with one expiration time and comprises one or more single-shot timing events scheduled at said one expiration time; and accessing the event lists to add or cancel single-shot timing events in the event lists.

According to an aspect there is provided a non-transitory computer readable medium comprising instructions stored thereon for performing at least the following to manage timer pools and single-shot timing events within the timer pools: accessing first level look-up-tables, a first level look-up table per a timer pool, the first level look-up table comprising for the timer pool a plurality of rows for pointers to second level look-up tables; accessing the second level look-up tables, a second level look-up table comprising M or less rows for pointers to event lists with expiration times, wherein an event list is associated with one expiration time and comprises one or more single-shot timing events scheduled at said one expiration time; and accessing the event lists to add or cancel single-shot timing events in the event lists.

According to an aspect there is provided a computer program comprising instructions which, when executed by an apparatus, cause the apparatus to perform at least the following to manage timer pools and single-shot timing events within the timer pools: accessing first level look-up-tables, a first level look-up table per a timer pool, the first level look-up table comprising for the timer pool a plurality of rows for pointers to second level look-up tables; accessing the second level look-up tables, a second level look-up table comprising M or less rows for pointers to event lists with expiration times, wherein an event list is associated with one expiration time and comprises one or more single-shot timing events scheduled at said one expiration time; and accessing the event lists to add or cancel single-shot timing events in the event lists.

According to an aspect there is provided a data structure for a timer pool providing L expiration times, the data structure for the timer pool comprising: a first level look-up table comprising N rows for pointers to second level look-up tables; second level look-up tables comprising, per a second level look-up table, M or less rows for pointers to event lists with expiration times, wherein $L=NM$; and event lists, an event list per an expiration time, comprising single-shot timing events with corresponding expiration time.

According to an aspect there is provided a memory storing at least data structures for timer pools, a data structure for a timer pool comprising: a first level look-up table comprising N rows for pointers to second level look-up tables; second level look-up tables comprising, per a second level look-up table, M or less rows for pointers to event lists with expiration times, wherein $L=NM$ and L is the number of expiration times provided by the timer pool; and event lists (123-3), an event list per an expiration time, comprising single-shot timing events with corresponding expiration time.

BRIEF DESCRIPTION OF DRAWINGS

Embodiments are described below, by way of example only, with reference to the accompanying drawings, in which

Fig. 1 illustrates an exemplified wireless communication system with a schematic block diagram;
Fig. 2 illustrates a high-level view of an example of hardware accelerator architecture;
Fig. 3 illustrates a high-level view of another example of hardware accelerator architecture;
Fig. 4 is a flow chart illustrating example functionality;
Fig. 5 is a flow chart illustrating example functionality;
Fig. 6 is a flow chart illustrating example functionality;
Fig. 7 is a flow chart illustrating example functionality;
Fig. 8 is a flow chart illustrating example functionality;
Fig. 9 is a flow chart illustrating example functionality;
Fig. 10 is a flow chart illustrating example functionality;

Fig. 11 is a schematic block diagram; and

Fig. 12 is a schematic block diagram.

DETAILED DESCRIPTION OF SOME EMBODIMENTS

The following embodiments are only presented as examples. Although the specification may refer to "an", "one", or "some" embodiment(s) and/or example(s) in several locations, this does not necessarily mean that each such reference is to the same embodiment(s) or example(s), or that a particular feature only applies to a single embodiment and/or single example. Single features of different embodiments and/or examples may also be combined to provide other embodiments and/or examples. Furthermore, words "comprising" and "including" should be understood as not limiting the described embodiments to consist of only those features that have been mentioned and such embodiments may contain also features/structures that have not been specifically mentioned. Further, although terms including ordinal numbers, such as "first", "second", etc., may be used for describing various elements, the elements are not restricted by the terms. The terms are used merely for the purpose of distinguishing an element from other elements. For example, a first element could be termed a second element, and similarly, a second element could be also termed a first element without departing from the scope of the present disclosure.

5G-Advanced, and beyond future wireless networks aim to support a large variety of services, use cases and industrial verticals, for example unmanned mobility with fully autonomous connected vehicles, other vehicle-to-everything (V2X) services, or smart environment, e.g. smart industry, smart power grid, or smart city, just to name few examples. To provide a variety of services with different requirements, such as enhanced mobile broadband, ultra-reliable low latency communication, massive machine type communication, wireless networks are envisaged to adopt network slicing, flexible decentralized and/or distributed computing systems and ubiquitous computing, with local spectrum licensing, spectrum sharing, infrastructure sharing, and intelligent automated management underpinned by mobile edge computing, artificial intelligence, for example machine learning, based tools, cloudification and blockchain technologies. For example, in the network slicing multiple independent and dedicated network slice instances may be created within the same infrastructure to run services that have different requirements on latency, reliability, throughput and mobility.

6G (sixth generation) networks are expected to adopt flexible decentralized and/or distributed computing systems and architecture and ubiquitous computing, with local spectrum licensing, spectrum sharing, infrastructure sharing, and intelligent automated management underpinned by mobile edge computing, artificial intelligence, short-packet communication and blockchain technologies. Key features of 6G will include intelligent connected management and control functions, programmability, joint communication and sensing, reduction of energy footprint, trustworthy infrastructure, scalability and affordability. In addition to these, 6G is also targeting new use cases covering the integration of localization and sensing capabilities into system definition to unifying user experience across physical and digital worlds.

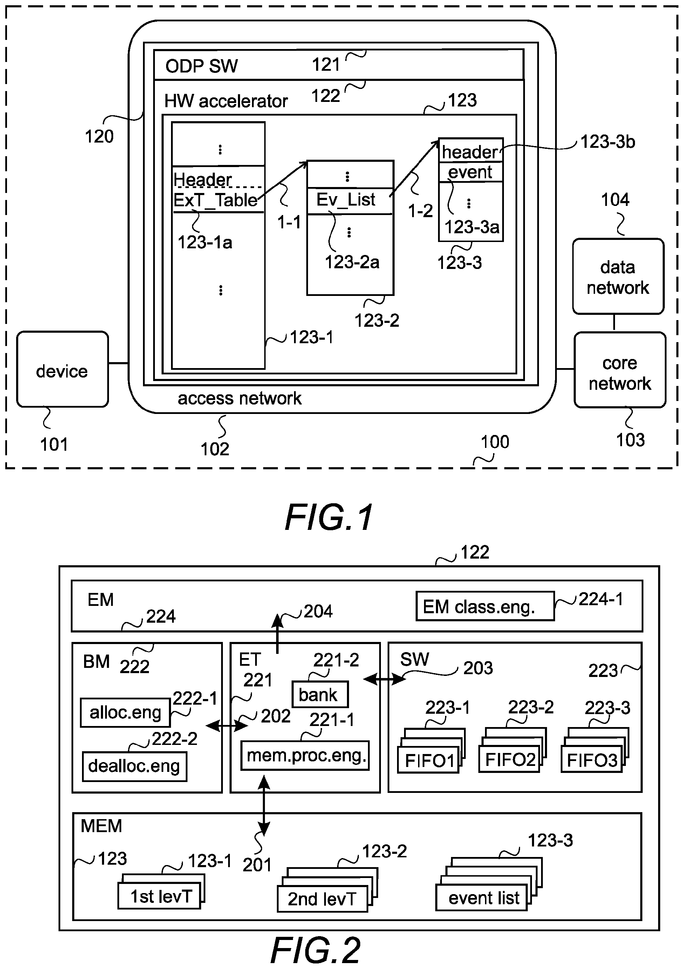

In 5G and beyond 5G, it is envisaged that hardware acceleration with corresponding abstraction models is used. The abstraction models are utilizing logical processing units that may run on computing platforms. The hardware on which the abstraction models can run may be commercial off-the-shelf platforms. To facilitate network functions running on different platforms, software frameworks, such as Open Data Plane (ODP) are envisaged to be used. The software frameworks manage timing related functionalities by using, for example, single-shot timing events, that may be called as single-shot timers, as event timers and timer pools. The timing related functionalities are envisaged to be offloaded to hardware accelerators, that are specialized processing units, for example by means of single-shot timing events associated with corresponding expiration times. Offloading of time management has two contradictory requirements. One of the requirements is fast search (small latency) within timing events stored, the fast search being achievable by data structures increasing memory usage. The other one of the requirements is small memory usage achievable by data structures increasing latency of search. In Fig. 1 a data structure that provides a balance between the two requirements is disclosed.

Fig. 1 illustrates an exemplified high-level network architecture 100, only showing some details relating to offloading timing related operations, the more detailed implementation being irrelevant for the description of examples. The examples are described herein using principles and terminology of 5G and 5G-Advanced. A person skilled in the art may apply the solutions and examples to other communication systems, for example beyond 5G-Advanced, or communication system implementing similar principles and functionalities, possibly with different terms having corresponding meaning, but using some other than 5G technology.

Referring to Fig. 1, disaggregated, virtualized and software-based components comprise device components 101 for device functionalities in device domain, access network components 102 for access network functionalities in access network domain, core network components 103 for core network functionalities in core network domain, data network components 104 for data network functionalities in data network domain.

A device component 101 may be any electrical device, or apparatus, connectable to an access network. A non-limiting list of examples of device components 101 comprises a user equipment, a smart phone, an internet of things device, an industrial internet of things device, a consumer internet of things device, an on-person device, a wearable device, such as a smart watch, a smart ring, an eHealth related device, a medical monitoring device, a sensor, such as pressure sensor, a humidity sensor, a thermometer, a motion sensor, an actuator, an accelerometer, etc., a surveillance camera, a vehicle, automated guided vehicles, autonomous connected vehicles etc.

An access network may be any kind of an access network, such as a cellular access network, for example 5G-Advanced network, a non-terrestrial network, a legacy cellular radio access network, or a non-cellular access network, for example a wireless local area network. To provide the wireless access, the access network comprises apparatuses, such as access devices, as access network components 102. There are a wide variety of access devices, including different types of base stations, such as as eNBs, gNBs, split gNBs, transmission-reception points, network-controlled repeaters, nodes operationally coupled to one or more remote radio heads, satellites, donor nodes in integrated access and backhaul (IAB), fixed IAB nodes, mobile IAB nodes mounted on vehicles, for example, etc. At least some of the apparatuses in the access network may provide an abstraction platform to separate abstractions of network functions from the processing hardware.

The core network components 103 form one or more core networks. A core network may be based on a non-standalone core network, for example an LTE-based network, or a standalone access network, for example a 5G core network. However, it should be appreciated that the core network, and the core network components 103, may use any technology that enable network services to be delivered between devices and data networks.

A data network may be any network, like the internet, an intranet, a wide area network, etc. Different remote monitoring and/or data collection services for different use cases may be reached via the data network and the data network components 104.

An apparatus 120 illustrates an example of an apparatus (component) in the access network wherein the apparatus performs one or more network functions utilizing one or more applications that may use open data plane software platform, OPD SW, 121 for time management that is offloaded to a hardware, HW, accelerator 122. It should be appreciated that implementation details to manage armed single-shot timers and corresponding timing events and data structure disclosed herein with any example may be used with other corresponding platforms, and/or by apparatuses in the core network.

Applications running on the open data plane software platform 121 measure and respond to passage of time by using timers. To offload the time management to the hardware accelerator 122, the open data plane software platform 121 configures one or more timer pools, selects, per a timer pool, a clock source and enables the timer pools. Main parameters of a timer pool from the point of view of the open data plane software platform 121 are a timer pool identifier, resolution and maximum timeout. The maximum timeout may be configured using a parameter, whose value will be used with a value of the resolution time to compute a value of the maximum timeout. The parameter is called herein a timeout parameter. In an implementation, the open data plane software platform 121 may configure a further parameter for the timer pools, the further parameter being called herein a compression parameter. The open data plane software platform 121 may have one or more preconfigured values Y of the compression parameter, for example a value Y per a value X of the timeout parameter. When the one or more timer pools have been configured, the open data plane software platform 121 may add, i.e. arm, single-shot timers to the timer pools to schedule events, and if needed, to cancel them, for example, by transmitting corresponding function calls. A single-shot timer can be added to generate a timeout independently from other single-shot timers, and single-shot timers may be shared across multiple software threads. A single-shot timer is an entry in the second level look-up table 123-2 which is linked, via an event list, to one or more events, i.e. to a plurality of events, in the event list 123-3. One may say that the single-shot timer has a form of an event, e.g. an open data plane event, and the single-shot timer is associated with an expiration time. In other words, a single-shot timer may be represented by a data structure that comprises an identifier, an expiration time, and an event, or more precisely a data structure representing the event. The event may be called a single-shot timing event, or shortly a timing event. When the single-shot timers expire they create timeouts, which serve as notifications of timer expiration to the applications running on the open data plane software platform 121.

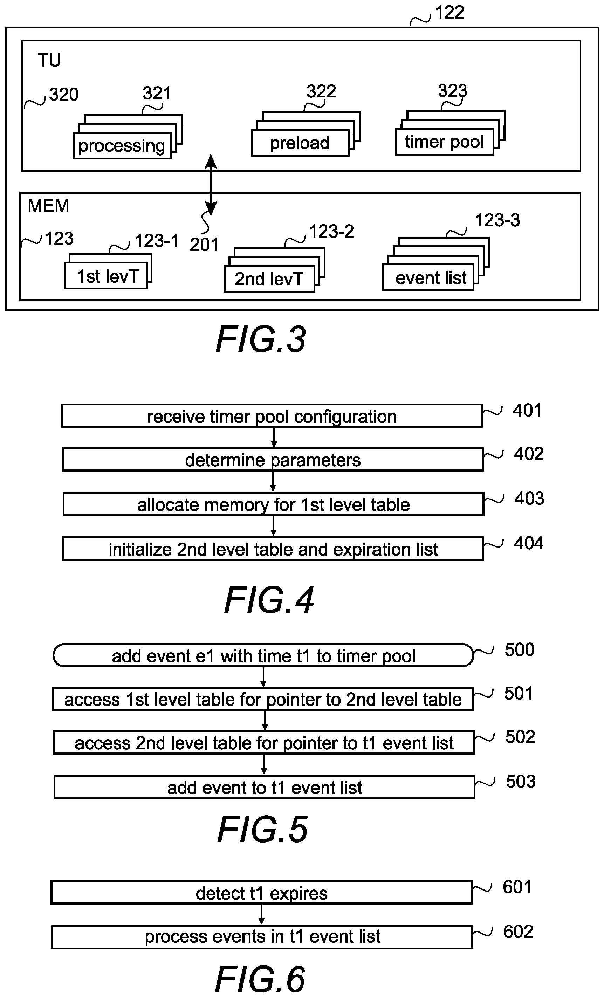

The hardware accelerator 122 receives function calls relating to single-shot timers (timing events) via one or more dedicated hardware interfaces (not illustrated in Fig. 1), as is known in the art. The hardware accelerator 122 manages timer pools and timing events within the timer pools by accessing a memory 123 storing single-shot timer related information. A more detailed examples of hardware accelerator implementations, for example engines and sub-systems the hardware accelerator may comprise, are described below with Fig. 2 and Fig. 3. The memory 123 may be an external memory or internal memory. The external memory may be external to one or more circuitries, or chips, implementing the hardware accelerator for the time management. For example, the external memory may be an on-chip memory or off-chip memory.

To optimize, or balance, memory size required and latency in searching, a two-level look-up table data structure is used. In the two-level look-up table data structure, or shortly two-level look-up table, the memory comprises, per a timer pool configured, in a first level of the look-up table a table 123-1 and in a second level a plurality of lists 123-2 (one illustrated in Fig. 1), a list 123-2 in the second level of the look-up table comprising pointers to event lists 123-3 (one illustrated in Fig.

1). In other words, the two-level look-up table for a timer pool comprises a first level table and second level look-up table(s). In an implementation, memory for first level tables 123-1 is allocated during configuration and the second level look-up tables 123-2 are implemented using buffer technology, including buffer pointers to the second level look-up tables. A buffer pointer points in the memory 123 to an area, or location, containing one or more entries (records) associated with an expiration time. The area may have a specific or configured size. However, it should be appreciated that in another implementation memory for the second level look-up tables 123-2 may be allocated during the configuration. The event lists 123-3 may be implemented using the buffer technology, including buffer pointers to the event lists, regardless how the second level look-up tables are implemented.

The values for resolution and maximum timeout configure the size of the timer pool. The size defines a maximum number L of expiration times usable for timing events. The number of the rows N in the first level table 123-1 is defined by the value X of the timeout parameter and the value Y of the compression parameter. As said above, the open data plane software platform 121 may configure the value Y. Another alternative include that the hardware accelerator 122 has one or more preconfigured values Y of the compression parameter, for example a value of the compression parameter per a value of the timeout parameter. The number of the rows M in the second level look-up table 123-2 is defined by the value Y of the compression parameter. The size of the first level look-up table 123-1 and the size of the second level look-up table 123-2 may be freely chosen, optimal sizes being power of 2 sizes, providing an optimized structure. Based on a single-shot timers concept (equation 1 below) and the optimal sizes, following size dependencies for L, N and M and the parameters may be given:

$$L = NM$$

$$N = 2^X / 2^Y$$

$$M = 2^Y$$

$$MT = (2^X - 1)RT \qquad (1)$$

wherein

L = maximum number of different expiration times in a timer pool
N = number of rows in the first level table 123-1
M = (maximum) number of rows in the second level look-up table 123-2
X = value of time-out parameter
Y = value of compression parameter
MT = value of maximum timeout
RT = value of resolution time

The parameter values X and RT may be used to calculate a duration of the timeout. For example, for a resolution time 100 nanoseconds and for the timeout parameter value X = 20, the timeout may be 0.1049 seconds (100 nanoseconds $\times$ $2^{20}$).

It should be appreciated that in the equation above it is assumed that the first possible expiration time is assumed to be zero, and hence the equation contains "-1". Further, it should be noted that the maximum number of different expiration times is usually bigger than a maximum number of timing events that may be armed simultaneously.

In the first level table 123-1, a row 123-1a comprises a header and a pointer 1-1 to a second level look-up table 123-2 (Ext_Table). The size of the header may be 64 bits, the pointer may be a 64-bit pointer, the size of the row 123-1a may thus be 128 bits or 16 bytes, and a space required to be allocated from the memory 123 for the first level table may be N $\times$ 16 bytes, i.e. ($2^X / 2^Y \times$ 16 bytes). The header comprises bitmasks, link's pointer (i.e. memory address for the first level table), list's info (i.e. information on the first level table), etc., as is known in the art. The pointer 1-1 is a pointer to a start of the second level look-up table, comprising a set of M expiration times. A first row in the look-up table may comprise a pointer to a second level look-up table comprising first M expiration times, e.g. expiration times 0 to M-1, the next row comprising a pointer to expiration times M to 2M-1, etc.

For example, first three rows in the first level table 123-1 could be for following sets of M expiration times:

$$0x2^Y xRT \sim (1x2^Y - 1)xRT$$

$$1x2^YxRT \sim (2x2^Y\text{-}1)xRT$$

$$2x2^YxRT \sim (3x2^Y\text{-}1)xRT$$

and the last two rows in the first level table 123-1 for following sets of M expiration times:

$$((2^X/2^Y)\text{-}2)x2^YxRT \sim (((2^X/2^Y)\text{-}1)x2^Y\text{-}1)xRT$$

$$((2^X/2^Y)\text{-}1)x2^YxRT \sim (((2^X/2^Y)\text{-}0)x2^Y\text{-}1)xRT$$

wherein

x means multiplication
Y = value of the compression parameter
RT = value of resolution time
X = value of timeout parameter

The second level look-up table 123-2 is an expiration time list. The second level look-up table 123-2 comprises for the M expiration times, for an expiration time per a row 123-2a, preferable in a form of an ordered list, pointers 1-2 to starts of event lists (Ev_List), a pointer 1-2 per a row to an event list having the expiration time of the row. The pointer 1-2 may be a 64-bit pointer, the size of the row 123-2a may thus be 8 bytes and a maximum space required by the second level look-up table 123-2 may be M × 8 bytes, i.e. $2^Y \times 8$ bytes. Using the above example of the first level table, the second level look-up table 123-2 supports $2^Y$, preferably ordered, expiration times with intervals of the resolution time.

For example, for a first row in the first level table 123-1, pointers for following expiration times may be given in the first three rows of the second level look-up table 123-2 pointed to by said first row:

0xRT
1xRT
2xRT
and in the last two for following expiration times:

$$(2^Y\text{-}2)xRT$$

$$(2^Y\text{-}1)xRT$$

wherein

x means multiplication
Y = value of the compression parameter
RT = value of resolution time

An event list 123-3 comprises a header portion 123-3b followed by one or more events 123-3a, an event (event entry) per a row. The size of an event entry may be 256-bit or 32 bytes according to timing event entry content. The event list 123-3 may be implemented as linked lists having a maximum predetermined size. For example, an event list may comprise 32 rows, a row for a header and 31 rows for events. The header 123-3b may comprise a pointer to another event list for the same expiration time, which in turn may comprise a pointer to a further event list for the same expiration time, etc. However, herein such linked lists are interpreted to be a single event list with a single expiration time. The number of the event lists depends on how many events (single-shot timing events), or armed single-shot timers, have different expiration times, scheduled by the open data plane software platform 121. If all events have the same expiration time, there will be one event list, if one or more events have a first expiration time and one or more events have a second expiration time, there will be two event lists, etc. The header 123-3b may further comprise bitmasks, link's pointer, list's info including, when the event list is a linked list, a pointer to the next list, etc., as is known in the art.

By organizing, as described above, the possible expiration times by groups of $2^Y$ expiration times with the two-level look up table structure having first level tables and second level look-up tables, it is possible to reduce memory size required compared to solutions using one-level look-up table solutions while keeping the searching complexity simple enough for hardware implementation, for example compared to searching complexity of a binary search tree structure.

Assuming that the number of timer pools is 64, and the timer pools have following configurations: the maximum number of armed single-shot timers simultaneously at any given time is 100 000, the resolution time is 100 nanoseconds, value of the timeout parameter X is 25, value of the compression parameter Y is 8, and an entry structure size (size of one row or entry) is 8 bytes, following comparisons for a worst case scenario can be made with the one-level look-up table comprising $2^X$ rows (i.e. a row per an expiration time) and with the binary tree structure having four memory pointers.

Memory usage:

- Two-level look-up table:

$$(64 \text{ timer-pools x first level table size}) + (100K \text{ armed single-shot timers}$$
$$\text{x second level look-up table size})$$
$$= 64 \text{ x } (2^{25}/2^8) \text{ x } 8 \text{ B}) + (100\,000 \text{ x } 2^8 \text{ x } 8 \text{ B})$$
$$= \sim 260 \text{ MB}$$

- One-level look-up table:

$$64 \text{ timer-pools x table size}$$
$$= 64 \text{ x } 2^{25} \text{ x } 8 \text{ B}$$
$$= \sim 16\,384 \text{ MB}$$

- Binary tree structure:

$$100 \text{ K armed single-shot timers x 4 memory pointers x entry size}$$
$$= 100\,000 \text{ x } 4 \text{ x } 8 \text{ B}$$
$$= \sim 3 \text{ MB}$$

Searching latency, i.e. searching complexity O of an expiration time for 100 000 armed single-shot timers for all 64 timer pools:

- Two-level look-up table = O(2)
- One-level look-up table = O(1)
- Binary tree structure = O(17)

In the binary tree structure the complexity is $O(\log_2(\text{maximum number of armed timers}))$, and the binary tree structure may also need rebalancing which in the worst case may result to a searching complexity of O(100 000).

As can be seen from the above comparison, the two-level look-up table implementation requires almost 63 times less memory space than the one-level look-up table with only O(2) searching complexity, at least eight times less than the binary tree structure. In other words, the two-level look-up table use as less memory for the data structure as possible while providing fast enough search algorithm to find, for example, a first-to-expire single-shot timer record (i.e. one or more first-to expire events with the first-to-expire expiration time), or an armed single-shot timer record (an event in an event list) to be cancelled or removed, or a location where to add a new armed timer record (i.e. find an event list and a row whereto add an event).

By performing memory space calculations for different values of the timeout parameter X and with different values of the compression parameter Y per X, and assuming 64 timer pools, a maximum number of armed single-shot timers 100 000, maximum number of second level look-up tables 100 000 with a second level look-up table size $2^Y \times 8$ bytes, 100 000 event lists, an event list having a size of 1000 bytes ($32 \times 32$ bytes), following combinations provided the minimum required memory space:

- X = 18, Y = 4
- X = 19, Y = 5
- X =20, Y=5

- X=21,Y=6
- X = 22, Y=6
- X=23,Y=7
- X = 24, Y = 7
- X=25,Y=8

Fig. 2 and Fig. 3 illustrate high-level views of examples of hardware accelerator architecture by showing a high-level view of entities in an event socket, which is a hardware accelerator for event management. In other words, Fig. 2 and Fig. 3 illustrate high-level views of examples of entities in an apparatus supporting hardware acceleration for timing, and describe examples of how to realize hardware-software offloading using the two-level look-up table for timing events. It should be appreciated that the hardware accelerator based on the example of Fig. 2 or on the example of Fig. 3 may comprise also other entities and elements not disclosed herein. Further, the examples, including entities listed, are non-limiting examples.

The hardware accelerator 122 may comprise or be comprised in, for example, one or more hardware apparatuses comprising different general purpose processors, or one or more other commercial off-the-shelf devices or platforms and application programming interfaces to implement the entities with corresponding functionality. A non-limiting list of hardware for hardware accelerators includes a central processing unit, a graphics processing unit, a data processing unit, a neural network processing unit, a field programmable gate array, a graphics processing unit based system-on-a-chip, a field programmable gate arrays based system-on-a-chips, a programmable application-specific integrated circuit, etc. The hardware may use one or more reusable logic units, also known as Intellectual Property (IP)-cores, which may have been watermarked for protecting the IP-cores authenticity. In IP-cores watermarking, the signature is represented by a Finite State Machine (FSM). Since all algorithms relating to single-shot timers can be implemented as FSM IP-core implementations, complex multistep usually used in software implementations can be avoided.

Referring to Fig. 2, the hardware accelerator 122 may comprise an event timer (ET) subsystem 221, a buffer manager (BM) subsystem 222, a software (SW) side 223, an event manager subsystem 223, and a memory 123 storing for the two-level look up-tables a plurality of fist level tables (1st levT) 123-1, and a plurality of second level look-up tables (2nd levT) 123-2, and a plurality of event lists 123-3 for timing events, as described in more detail with Fig. 1. As described with Fig. 1, the memory may be an external memory, for example an external memory to hardware implementing the event timer subsystem.

In the example of Fig. 2, an interactivity 201 between the event timer subsystem 221 and the memory may be a direct memory access read or write operation. Interactivities 202 between the event timer subsystem 221 and the buffer manager subsystem 222 relate to allocation and deallocation of buffer pointers, for example pointers to second level look-up tables 123-2 and/or pointers to event lists 123-2. Interactivities 203 between the event timer subsystem 221 and the software side 223 provide an application programming interface (API) to arm or cancel timers. Interactivities 204 between the event timer subsystem 221 and the event manager subsystem 204 comprise expired events.

In the example of Fig. 2, the event timer subsystem 221 comprises a memory processing engine (core) 221-1 for managing different offloaded single-shot timer related operations including storing events in the memory 123, using the buffer manager subsystem 222, searching for armed single-shot timers, monitoring expiration times, forwarding events of expired times to the event manager subsystem 224, etc. The memory processing engine 221-1 also maintains, per a timer pool, an internal counter that represents a current pool time in units of a clock selected by the open data plane software platform for the timer pool when the timer pool is created. The internal counter provides a reference clock value for monitoring the expiration times. The internal counter may be up to 64 bits. The event timer subsystem 221 comprises also a register bank 221-2 which comprises configuration information, shortly configurations, relating to the two-level look-up tables, internal engines and blocks, HW FIFOs, etc. as well as all status and errors of sub-blocks of the event timer are organized in the event timer's register bank 221-2.

In the example of Fig. 2, the buffer manager subsystem 222 comprises an allocation engine 222-1 to allocate free buffer pointers for second level look-up tables 123-2 and for event lists 123-3 and a deallocation engine 222-2 to deallocate buffer pointers. For the allocation engine, any of following may be preconfigured or provided when a timer pool is created: the value of the parameter X, the value of the parameter Y, the size of an entry (size of a row) in the first level table, the size of an entry (size of a row) in the second level look-up table(s), and the size of an entry (size of a row) in the event list(s). The allocation engine 222-1 may be configured to allocate memory space for the first level table 123-1 when the timer pool is created, whereas memory space for the second level look-up tables and for the event lists may be allocated dynamically for expiration time(s), for example by a buffer manager unit for memory buffer pointer allocation and/or deallocation purposes, as is known in the art.

In the example of Fig. 2 the software side 223 comprises three parallel hardware first-in-first-out (FIFO) lists 223-1, 223-2, 223-3 for each software thread per a timer pool, the lists providing a software interface. For example, to support 32 software threads and to have 64 timer pools, the software side comprises $3 \times 32 \times 64$ FIFO lists. The FIFO lists may have a predetermined depth. The open data plane software platform may use two of the lists to write commands or requests to the lists to get answers/statuses relating to entries within a short time and one list for cancelling entries. One 223-1 of the lists may be for adding one by one a new expiration time, i.e. adding an entry to a second level look-up table. The list 223-1 may be called a software API 1. The input to the list 223-1 may comprise an expiration time and a pointer to an event, both 64 bits long, for example. The pointer to the event is a pointer to a memory location of the event, or an event packet, in a memory used by the offloading entity to store events. In other words, the software API 1 is for the event timer to read events from the memory used by the offloading entity, so that the events read can be added to event lists. One 223-2 of the lists may be for adding to an expiration time an event package comprising one or more events. The list 223-2 may be called a software API 2. An entry in the list 223-2 may be 64-bit long event, for example. One 223-3 of the lists may be for cancelling one by one an entry in an event list 123-3 in the memory, i.e. cancelling one event, and/or an entry in a second level look-up table 123-2 in the memory, i.e. cancelling one expiration time, resulting that events with the expiration time will be cancelled also.

In the example of Fig. 2, the event manager subsystem 224 comprises an event manager classifier engine 224-1 to receive events whose expiration time is expired to be processed by the open data plane software platform. The events having the same expiration time from one timer pool may be received one by one, the event manager classifier engine 224-1 forming an event queue of the events. The event queue may be called a destination event queue.

Referring to Fig. 3, the hardware accelerator 122 comprises a timer unit TU 320, for example in the event timer, and a memory 123 storing for the two-level look up-tables a plurality of fist level tables (1st levT) 123-1, and a plurality of second level look-up tables (2nd levT) 123-2, and a plurality of event lists 123-3 for timing events, as described in more detail with Fig. 1. As described with Fig. 1, the memory may be an external memory, for example an external memory to hardware implementing the event timer subsystem.

In the example of Fig. 3, the interactivity 201 between the timer unit 320 and the memory may be a direct memory access read or write operation.

In the example of Fig. 3, the timer unit TU 320 may comprise one or more two level look-up table processing engines 321, one or more preload engines 322 and one or more timer pool engines 323.

The two level look-up table processing engines 321 may be used for managing and processing two level look-up tables data structures, i.e. the first level tables 123-1 and the second level look-up tables 123-2, and the event lists 123-3, to add or cancel one or more expiration times and/or timing event entries for single-shot timers (single-shot timing operations). The two level look-up table processing engine may also allocate and deallocate buffer pointers to the second level look-up tables 123-2 and/or to the event lists 123-3. A two-level look-up table processing engine 321 may include a control unit, one or more read and write direct memory access blocks, one or more interconnect arbitration switches, etc.

The preload engines 322 may be used for preloading timing event entries and expiration times for the single-shot timers close to expiring. The preload engines 322 may be parallel preload engines. The preload engines 322 may also deallocate the buffer pointers. A preload engine may include a control unit, one or more read and write direct memory access engines for preloading or reading timing events and expiration times, one or more interconnect arbitration switches, etc.

The timer pool engines 323 may be used for monitoring expiration times and for transmitting timing event entries to be processed. The timer pool engines 323 may be parallel timer pool engines, and there may be a timer pool engine per a timer pool assigned to a software thread. A timer pool engine may be configured to compare a preloaded expiration time with a reference counter value, for example, to detect expiration of the time. The timer pool engine 323 may include a control unit, one or more first-in-first-out blocks for preloaded expiration times and timing events and expiration times, event message transmitting and control blocks, one or more interconnect arbitration switches, etc.

As shown in Fig. 2 and Fig. 3, the hardware accelerator may be constructed based on different internal engines, which may be parallel engines, an engine being responsible for supporting one or more functions. In the examples of Fig. 4 to Fig. 10 different example functionalities are described, without allocating the functionalities to specific engines, since it bears no significance which engine performs one or more of the functionalities. Further, for the sake of clarity of description, the examples uses one timer pool and one expiration time, without limiting the examples to such a solution. It is a straightforward process for one skilled in the art to apply the examples to a plurality of timer pools and to a plurality of expiration times. It should be also appreciated that some of the blocks may be run in parallel even though for the sake of clarity of description the blocks are described one by one in a non-limiting order.

Referring to Fig. 4, when an apparatus comprising the hardware accelerator receives (block 401) a timer pool configuration, parameters for the timer pool are determined (block 402). For example, the timer pool configuration may comprise an identifier of the timer pool, indication of a clock source to be used with the timer pool and configuration information for timing events. The maximum number of simultaneously armed timers and/or the maximum number of buffer pointers may be reset to the hardware apparatus, for example based on processing and/or memory capacity, or one or both of them may be received in the configuration information, or the apparatus may be configured to calculate one or both of them based on memory usage, for example. In one implementation, the configuration information comprises a resolution value and a maximum timeout value, wherein determining the parameters comprises calculating a value X of the timeout parameter using equation 1, and obtaining from preconfigured (preset) information, for example, a value Y of the compression parameter, which value is associated with the value of the timeout parameter. In another implementation, the configuration information comprises a resolution value, a maximum timeout value, and a value Y of the compression parameter, wherein determining the parameters comprises calculating a value X of the timeout parameter using equation 1. In a still further implementation, the configuration information comprises a value X of the timeout parameter and a value Y of the compression parameter. Yet another implementation includes that the configuration information comprises a value X of the timeout parameter, wherein determining the parameters comprises obtaining from preconfigured information, for example, a value Y of the compression parameter, which value is associated with the value of the timeout parameter. In any of the implementations, determining (block 402) the parameters may comprise determining values of M (maximum number of rows in a second level look-up table) and N (number of rows in the first level table).

Then in the illustrated examples, memory for a first level table is allocated (block 403) and second level look-up tables and event lists are initialized (block 404). The initialization may include initializations of buffer pools and initializations of buffer pointer pools for the lists.

Referring to Fig. 5, when a request to add at least an event e1 with an expiration time t1 to a timer pool indicated is received (block 500), a first level table in the memory is accessed (block 501) for a pointer to a second level look-up table. In other words, the pointer to a second level look-up table comprising the expiration time is obtained by accessing the first level table in the memory. The pointer may be to the beginning of the second level look-up table. Then, using said pointer, the second level look-up table in the memory is accessed (block 502) for a pointer to an event list with expiration time t1 (t1 event list). In other words, the pointer to an event list for the expiration time t1 is obtained by accessing the second level look-up table in the memory. The pointer may be to the beginning of the t1 event list. Then, using said pointer to the t1 event list, the event e1 is added (block 503) to the t1 event list. The event e1 may added to be the last event in the list.

Referring to Fig. 6, when it is detected (block 601) that expiration time t1 expires, events in the t1 event list are processed (block 602). For example, timeouts may be generated, a timeout per an event in the event list whose associated time expired.

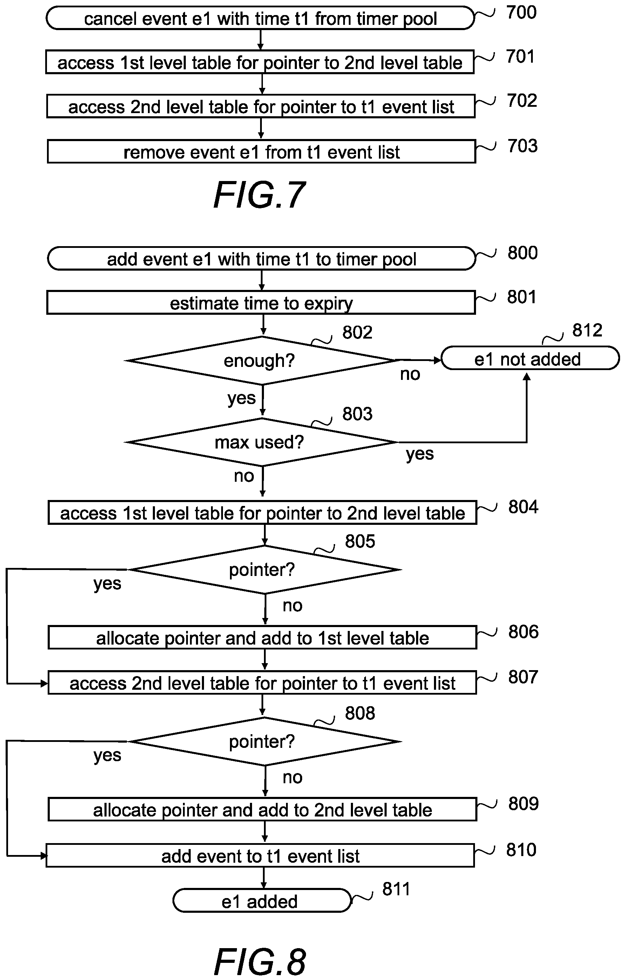

Referring to Fig. 7, if a request to cancel the event e1 with the expiration time t1 from the timer pool indicated is received (block 700), a first level table in the memory is accessed (block 701) for a pointer to a second level look-up table. In other words, the pointer to a second level look-up table comprising the expiration time is obtained by accessing the first level table in the memory. The pointer may be to the beginning of the second level look-up table. Then, using said pointer, the second level look-up table in the memory is accessed (block 702) for a pointer to an event list with expiration time t1 (t1 event list). In other words, the pointer to an event list for the expiration time t1 is obtained by accessing the second level look-up table in the memory. The pointer may be to the beginning of the t1 event list. Then, using said pointer to the t1 event list, the event e1 is removed (block 703), or deleted, from the t1 event list, for example by searching a matching event identifier, or event data structure, and when found, removing the event e1. Removing an event means that the event is cancelled.

Fig. 8, Fig. 9 and Fig. 10 illustrate more detailed examples of adding, canceling and processing events, assuming an implementation with an upper limit for armed single-shot timers and taking into account processing time. The upper limit in the example means a maximum number of buffer pointers that can be allocated for a timer pool.

Referring to Fig. 8, when a request to add at least an event e1 with an expiration time t1 to a timer pool indicated is received (block 800), a time between current time and the expiration time is estimated (block 801) in order to estimate whether there is enough time to add the event e1 (i.e. to arm the single-shot timer). If there is enough time (block 802: yes), it is checked (block 803), whether a maximum number of buffer pointers have been used. If the maximum number, for example 100 000 buffer pointers, has not yet been used (block 803: no), a first level table in the memory is accessed (block 804) for a pointer to a second level look-up table comprising the expiration time t1. If the first level table does not contain (block 805: no) a pointer to the second level look-up table comprising t1, a pointer to the second level look-up table is allocated (block 806) and also added (block 806) to the first level table for later use. Allocating a pointer to the second level look-up table may include reserving memory space for the whole second level look-up table (i.e. for M rows). Then, or if the first level table contained (block 805: yes) the pointer to the second level look-up table, using said pointer, the second level look-up table in the memory is accessed (block 807) for a pointer to an event list with the expiration time t1 (t1 event list). If the second level look-up table does not contain (block 808: no) a pointer to the t1 event list, a pointer to the t1 event list is allocated (block 809) and also added (block 809) to the second level look-up table for later use. Then, or if the second level look-up table contained (block 808: yes) the pointer to the t1 event list, using said pointer to the t1 event list, the event e1 is added (block 810) to the t1 event list, and a response indicating that the event e1 is added may be transmitted (block 811) as a response to the request.

If there is not enough time (block 802: no), or if the maximum number of buffers have been used (block 803: yes), a response indicating that the event e1 is not added may be transmitted (block 812) as a response to the request.

In an implementation, in which there are maximum number of buffer pointers for second level look-up tables and a maximum number of buffer pointer for event lists, the checking in block 803 may be modified to first include checking in block 805, and if a new pointer is needed, whether there are one or more free pointers for the second level look-up tables, and if there are, or if there is an existing pointer to a second level look-up table, to check whether there are free pointers for the event list, if needed.

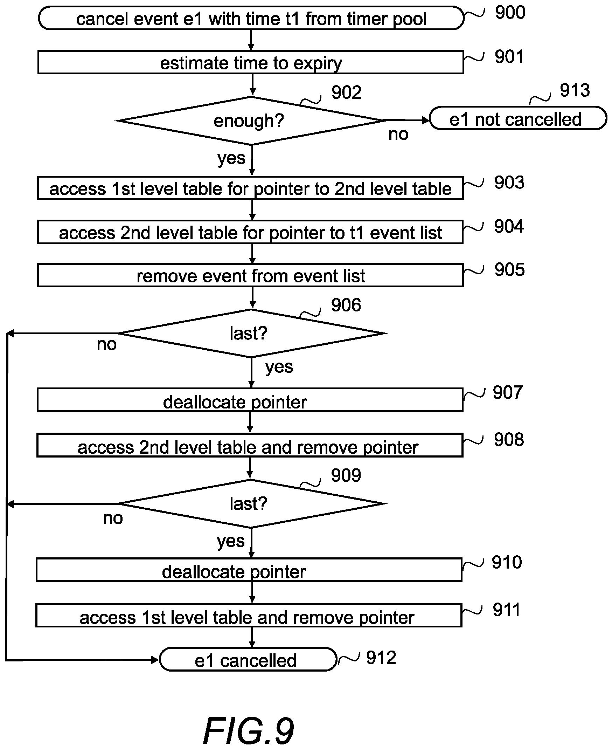

Referring to Fig. 9, when a request to cancel at least the event e1 with the expiration time t1 from the timer pool indicated is received (block 900), a time between current time and the expiration time is estimated (block 901) in order to estimate whether there is enough time to cancel the event e1. If there is enough time (block 902: yes), a first level table in the memory is accessed (block 903) for a pointer to a second level look-up table comprising the expiration time t1. Then, using said pointer, the second level look-up table in the memory is accessed (block 904) for a pointer to an event list with the expiration time t1 (t1 event list). Using said pointer to the t1 event list, the event e1 is removed (block 905), or deleted, from the t1 event list, for example by searching a matching event identifier, or event data structure, and when found, removing the event e1.

If the t1 event list comprised no other events, i.e. the event e1 removed was the last, or only, event in the t1 event list (block 906: yes), the pointer to the t1 event list is deallocated (block 907) and the second level look-up table in the memory is accessed (block 908) and the pointer that was deallocated is removed (block 908) from the second level look-up table.

If the second level look-up table comprised no other pointers, i.e. the pointer removed was the last, or only, pointer in the second level look-up table (block 909: yes), the pointer to the second level look-up table is deallocated (block 910) and the first level table in the memory is accessed (block 911) and the pointer that was deallocated in block 910 is removed (block 911) from the first level table.

Then, or if the t1 event list contains (block 906: no) one or more events after the event e1 is removed, or if the second level look-up table contains (block 909: no) one or more pointers after the pointer to the t1 event list is removed, a response indicating that the event e1 is cancelled may be transmitted (block 912) as a response to the request.

If there is not enough time (block 902: no) a response indicating that the event e1 is not cancelled may be transmitted (block 913) as a response to the request.

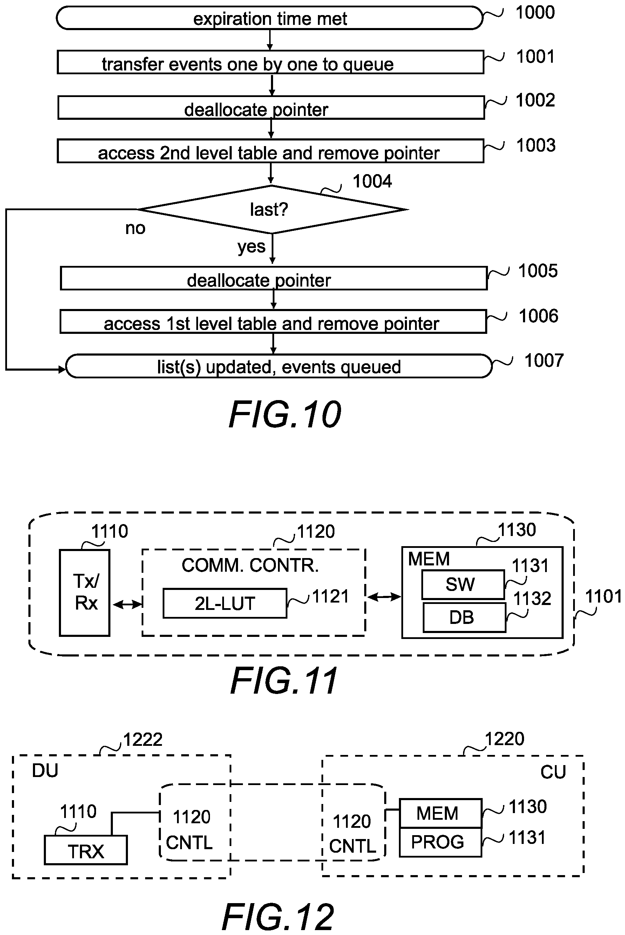

Referring to Fig. 10, when it is detected (block 1000) that an expiration time is met, events in the t1 event list are processed by transferring (block 1001) the events one by one to a processing queue, to generate, for example, timeouts, a timeout per an event in an event list whose associated time expired. Using the example of Fig. 2, and assuming that many timing events (timing event entries) are attached to the expiration time (i.e., many single-shot timers are armed for the expiration time), and that the events are transferred one by one to the event manager's queue, and that the event manager and its next processing block after the event manager's queue need time to process and store the timing event entries, then the last timing event entry will be stored in the event manager queue with some delay after the expiration time expired. The delay (process and store delay) may be calculated by multiplying the number of timing events in the event list by a number of clock cycles for queuing and processing of one timing event. After emptying the event list in block 1001, a pointer to the event list for the expiration time is deallocated (block 1002). The second level look-up table in the memory is also accessed (block 1003) and the pointer that was deallocated is removed (block 1003) from the second level look-up table. Then, it is checked, whether the second level look-up table contains (block 1004: no) one or more pointers after the pointer is removed in block 1003.

If the second level look-up table comprised no other pointers, i.e. the pointer removed was the last, or only, pointer in the second level look-up table (block 1004: yes), the pointer to the second level look-up table is deallocated (block 1005) and the first level table in the memory is accessed (block 1006) and the pointer that was deallocated in block 1005 is removed (block 1006) from the first level table. The result of the process is (block 1007) then that expired events are queued and the event list, and the second level look-up table are updated to be non-existing by releasing corresponding memory resources.

If the second level look-up table comprised other pointers (block 1004: no), the result of the process is (block 1007) that expired events are queued and the event list is updated to be non-existing by releasing corresponding memory resources.

The engines, blocks, and related functions described above by means of Fig. 1 to Fig. 10 in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

Fig. 11 illustrates an apparatus 1101 according to some embodiments. The apparatus 1101 may be an apparatus, e.g. an electrical device, for offloaded timing management, i.e. for managing timer pools and single-shot timing events within the timer pools. Fig. 12 illustrates an apparatus that may implement distributed functionality of the apparatus illustrated in Fig. 11.

The apparatus 1101 may comprise one or more communication control circuitries 1120, such as at least one processor, and at least one memory 1130, including one or more algorithms 1131, such as a computer program code (software) wherein the at least one memory and the computer program code (software) are configured, with the at least one processor, to cause the apparatus to carry out any one of the exemplified functionalities, described above with any of Fig. 1 to Fig. 10. Said at least one memory 1130 may also comprise at least one database 1132.

According to an embodiment, there is provided an apparatus for managing timer pools and single-shot timing events within the timer pools, the apparatus comprising at least one processor; and at least one memory storing instructions that, when executed by the at least one processor, cause the apparatus to at least: access first level look-up-tables, a first level look-up table per a timer pool, the first level look-up table comprising for the timer pool a plurality of rows for first pointers to second level look-up tables,; access, using the first pointers, the second level look-up tables, a second level look-up table comprising M or less rows for second pointers to event lists with expiration times wherein an event list is associated with one expiration time, and comprises a plurality of single-shot timing events scheduled at the corresponding expiration time; and access, using the second pointers, the event lists to add or cancel single-shot timing events in the event lists.

Referring to Fig. 11, the one or more communication control circuitries 1120 of the apparatus 1101 comprise at least a two level look-up table (2L-LUT) circuitry 1121 which is configured to perform accessing the first level look-up tables, the second level look-up tables and event lists to perform the time management related functions, according to embodiments. To this end, the two level look-up table circuitry 1121 of the apparatus 1101 is configured to carry out at least some of the functionalities described above, e.g., by means of Fig. 1 to Fig. 10, using one or more individual circuitries.

Referring to Fig. 11, the memory 1130 may be implemented using any suitable data storage technology, such as semiconductor based memory devices, flash memory, magnetic memory devices and systems, optical memory devices and systems, fixed memory and removable memory.

Referring to Fig. 11, the apparatus 1101 may further comprise different interfaces 1110 such as one or more communication interfaces (TX/RX) comprising hardware and/or software for realizing communication connectivity according to one or more communication protocols. The one or more communication interfaces 1110 may enable connecting to the Internet and/or to a core network of a wireless communications network and/or to a radio access network and/or to other apparatuses within range of the apparatus. The one or more communication interface 1110 may provide the apparatus with communication capabilities to communicate in a cellular communication system and enable communication to different network nodes or elements. The one or more communication interfaces 1110 may comprise standard well-known components such as an amplifier, filter, frequency-converter, (de)modulator, and encoder/decoder circuitries, controlled by the corresponding controlling units, and possibly one or more antennas.

In an embodiment, as shown in Fig. 12, at least some of the functionalities of the apparatus of Fig. 11 may be shared between two physically separate devices, forming one operational entity. Therefore, the apparatus may be seen to depict the operational entity comprising one or more physically separate devices for executing at least some of the described processes. Thus, the apparatus of Fig. 12, utilizing such shared architecture, may comprise a remote control unit RCU 1220, such as a host computer or a server computer, operatively coupled (e.g. via a wireless or wired network) to a remote distributed unit RDU 1222. In an embodiment, at least some of the described processes may be performed by the RCU 1220. In an embodiment, the execution of at least some of the described processes may be shared among the RDU 1222 and the RCU 1220.

Similar to Fig. 11, the apparatus of Fig. 12 may comprise one or more communication control circuitries (CNTL) 1120, such as at least one processor, and at least one memory (MEM) 1130, including one or more algorithms (PROG) 1131, such as a computer program code (software) wherein the at least one memory and the computer program code (software) are configured, with the at least one processor, to cause the apparatus to carry out any one of the exemplified functionalities of the apparatus described above, e.g., by means of Fig. 1, and Fig. 5 to Fig. 9, for example, by the network device, or access device.

In an embodiment, the RCU 1220 may generate a virtual network through which the RCU 1220 communicates with the RDU 1222. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (e.g. to the RCU). External network virtualization is targeted to optimized network sharing. Another category is internal virtual networking which provides network-like functionality to the software containers on a single system. Virtual networking may also be used for testing the terminal device.

In an embodiment, the virtual network may provide flexible distribution of operations between the RDU and the RCU. In practice, any digital signal processing task may be performed in either the RDU or the RCU and the boundary where the responsibility is shifted between the RDU and the RCU may be selected according to implementation.

In a still further embodiment, the apparatus of Fig. 10 may be implemented in similar way as the apparatus of Fig. 12.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with Fig. 1 to Fig. 10 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Fig. 1 to Fig. 10 or operations thereof.

Embodiments and examples as described may also be carried out in the form of a computer process defined by a computer program or portions thereof. Embodiments of the functionalities described in connection with Fig. 1 to Fig. 10 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. The term "non-transitory," as used herein, is a limitation of the medium itself (i.e., tangible, not a signal ) as opposed to a limitation on data storage persistency (e.g., RAM vs. ROM). Coding of software for carrying out the embodiments as shown and described is well within the scope of a person of ordinary skill in the art.

Even though the embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus (120, 1101) for managing timer pools and single-shot timing events within the timer pools, the apparatus comprising at least:

    means (122, 221, 321, 1120) for accessing first level look-up-tables (123-1), a first level look-up table per a timer pool, the first level look-up table comprising for the timer pool a plurality of rows for first pointers (1-1) to second level look-up tables (123-2);
    means (122, 221, 321, 1120) for accessing, using the first pointers, the second level look-up tables (123-2), a second level look-up table comprising M or less rows for second pointers (1-2) to event lists (123-3) with expiration times, wherein an event list is associated with one expiration time, and comprises a plurality of single-shot timing events scheduled at the corresponding expiration time; and
    means (122, 221, 321, 1120) for accessing, using the second pointers, the event lists (123-3) to add or cancel single-shot timing events (123-3a) in the event lists.

2. The apparatus (120, 1101) of claim 1, further comprising at least:

    means (122) for receiving timer pool configuration information for one or more timer pools;
    means (122, 221, 321, 1120) for determining, per a timer pool, based at least on configuration information received for the timer pool, parameter values for the timer pool, the parameter values including L, which is a maximum number of possible expiration times whose value is based on maximum timeout and resolution of the timer pool, N, which is a number of rows for first pointers (1-1) in a first level look-up table for the timer pool, and M, wherein L, N and M are positive integers and L=MN;

means (122, 222, 321, 1120) for allocating from a memory (123), per a timer pool, memory space for a first level table with the N rows; and

means (122, 221, 321, 1120) for initializing, per a first level look-up table (123-1), second level look-up tables (123-2) with M or less rows and event lists for the expiration times, an event list per an expiration time.

3. The apparatus (120, 1101) of claim 1 or 2, further comprising at least:
means (122, 203, 323, 1120) for adding single-shot timing events to event lists using pointers in the first level tables and pointers in the second level look-up tables.

4. The apparatus (120, 1101) of claim 1, 2 or 3, further comprising at least:
means (122, 203, 323, 1120) for cancelling single-shot timing events from event lists using pointers in the first level tables and pointers in the second level look-up tables.

5. The apparatus (120, 1101) of claim 3 or 4, further comprising at least:

means (122, 203, 323, 1120) for receiving requests to add or cancel single-shot timing events, a request indicating a timer pool, a timing event and an expiration time;
means (122, 221, 323, 1120) for estimating, per a request, whether there is time to perform the request before the expiration time is met; and
means (122, 221, 322, 1120) for determining to perform the request when there is time to perform the request and not to perform the request when there is no time to perform the request.

6. The apparatus (120, 1101) of any preceding claim, wherein the apparatus further comprises at least:
means (122, 224, 322, 1120) for uploading single-shot timing events from the event lists to processing queues, when an expiration time of the event list is met.

7. The apparatus (120, 1101) of any preceding claim, wherein the pointers are buffer pointers and the apparatus further comprises at least:

means (222-1, 323, 1120) for allocating buffer pointers; and
means (222-2, 323, 1120) for deallocating buffer pointers.

8. The apparatus (1101) of any preceding claim, the apparatus comprising at least one chip (1121) configured to provide said means.

9. The apparatus (1101) of claim 8, wherein the first level look-up tables (123-1), the second level look-up tables (123-2) and the expiration lists (123-3) are stored to a memory (1130) that is external to said at least one chip (1121).

10. The apparatus (1101) of any preceding claim, wherein the apparatus comprises at least one processor (1120), and at least one memory (1131) storing instructions that, when executed by the at least one processor, provide the means.

11. A method for managing timer pools and single-shot timing events within the timer pools, the method comprising:

accessing (501, 701) first level look-up-tables, a first level look-up table per a timer pool, the first level look-up table comprising for the timer pool a plurality of rows for pointers to second level look-up tables, wherein N is a positive integer whose value is based on maximum timeout and resolution of the timer pool;
accessing (502, 702) the second level look-up tables, a second level look-up table comprising M or less rows for pointers to event lists with expiration times, wherein an event list is associated with one expiration time, and comprises a plurality of single-shot timing events scheduled at the corresponding expiration time; and
accessing (503) the event lists to add (603) or cancel (604) single-shot timing events in the event lists.

12. The method of claim 11, further comprising:

receiving (401) timer pool configuration information for one or more timer pools;

determining (402), per a timer pool, based at least on configuration information received for the timer pool, parameter values for the timer pool, the parameter values including N, which is a number of rows for first pointers in a first level look-up table for the timer pool, L, which is a maximum number of possible expiration times, and M, wherein N, L and M are positive integers and L=MN;

allocating (403) from a memory (123), per a timer pool, memory space for a first level table with the N rows; and

initializing (404), per a first level look-up table (123-1), second level look-up tables (123-2) with M or less rows and event lists for the expiration times, an event list per an expiration time.

13. The method of claim 11 or 12, further comprising:

receiving (500, 700, 800, 900) requests to add or cancel single-shot timing events, a request indicating a timer pool, a timing event and an expiration time;

using (501, 502, 701, 702, 804, 806, 807, 808, 809, 903, 904, 908) pointers in the first level tables and pointers in the second level look-up tables to add (503, 810) or cancel (703, 911) single-shot timing events in the event lists.

14. A computer readable medium comprising instructions stored thereon for performing at least the following to manage timer pools and single-shot timing events within the timer pools:

accessing (501, 701) first level look-up-tables, a first level look-up table per a timer pool, the first level look-up table comprising for the timer pool a plurality of rows for pointers to second level look-up tables;

accessing (502, 702) the second level look-up tables, a second level look-up table comprising M or less rows for pointers to event lists with expiration times, wherein an event list is associated with one expiration time and comprises one or more single-shot timing events scheduled at said one expiration time; and

accessing (503) the event lists to add (603) or cancel (604) single-shot timing events in the event lists.

15. The computer readable medium of claim 14, wherein the computer readable medium is a non-transitory computer readable medium.

16. A computer program comprising instructions which, when executed by an apparatus, cause the apparatus to perform at least the following to manage timer pools and single-shot timing events within the timer pools:

accessing (501, 701) first level look-up-tables, a first level look-up table per a timer pool, the first level look-up table comprising for the timer pool a plurality of rows for pointers to second level look-up tables;

accessing (502, 702) the second level look-up tables, a second level look-up table comprising M or less rows for pointers to event lists with expiration times, wherein an event list is associated with one expiration time and comprises one or more single-shot timing events scheduled at said one expiration time; and

accessing (503) the event lists to add (603) or cancel (604) single-shot timing events in the event lists.

17. A data structure for a timer pool providing L expiration times, the data structure for the timer pool comprising:

a first level look-up table (123-1) comprising N rows (123-1a) for pointers (1-1) to second level look-up tables;

second level look-up tables (123-2) comprising, per a second level look-up table, M or less rows (123-2a) for pointers (1-2) to event lists with expiration times, wherein L=NM; and

event lists (123-3), an event list per an expiration time, comprising single-shot timing events (123-3a) with corresponding expiration time.

18. A memory (123) storing at least data structures for timer pools, a data structure for a timer pool comprising:

a first level look-up table (123-1) comprising N rows for pointers to second level look-up tables;

second level look-up tables (123-2) comprising, per a second level look-up table, M or less rows for pointers to event lists with expiration times, wherein L=NM and L is the number of expiration times provided by the timer pool; and

event lists (123-3), an event list per an expiration time, comprising single-shot timing events with corresponding expiration time.

*FIG.1*

*FIG.2*

~122

TU

~320    321                    322                    323

processing        preload        timer pool

MEM

~123    ~123-1  201    ~123-2                ~123-3

1st levT        2nd levT        event list

## FIG.3

| receive timer pool configuration | ~ 401 |

| determine parameters | ~ 402 |

| allocate memory for 1st level table | ~ 403 |

| initialize 2nd level table and expiration list | ~ 404 |

## FIG.4

| add event e1 with time t1 to timer pool | ~ 500 |

| access 1st level table for pointer to 2nd level table | ~ 501 |

| access 2nd level table for pointer to t1 event list | ~ 502 |

| add event to t1 event list | ~ 503 |

## FIG.5

| detect t1 expires | ~ 601 |

| process events in t1 event list | ~ 602 |

## FIG.6

cancel event e1 with time t1 from timer pool — 700

access 1st level table for pointer to 2nd level table — 701

access 2nd level table for pointer to t1 event list — 702

remove event e1 from t1 event list — 703

## FIG.7

add event e1 with time t1 to timer pool — 800

estimate time to expiry — 801

enough? — 802

no → e1 not added — 812

yes

max used? — 803

yes →

no

access 1st level table for pointer to 2nd level table — 804

pointer? — 805

yes

no

allocate pointer and add to 1st level table — 806

access 2nd level table for pointer to t1 event list — 807

pointer? — 808

yes

no

allocate pointer and add to 2nd level table — 809

add event to t1 event list — 810

e1 added — 811

## FIG.8

cancel event e1 with time t1 from timer pool — 900

estimate time to expiry — 901

enough? — 902

e1 not cancelled — 913

no

yes

access 1st level table for pointer to 2nd level table — 903

access 2nd level table for pointer to t1 event list — 904

remove event from event list — 905

last? — 906

no

yes

deallocate pointer — 907

access 2nd level table and remove pointer — 908

last? — 909

no

yes

deallocate pointer — 910

access 1st level table and remove pointer — 911

e1 cancelled — 912

*FIG.9*

expiration time met ⌒ 1000

transfer events one by one to queue ⌒ 1001

deallocate pointer ⌒ 1002

access 2nd level table and remove pointer ⌒ 1003

last? ⌒ 1004

no

yes

deallocate pointer ⌒ 1005

access 1st level table and remove pointer ⌒ 1006

list(s) updated, events queued ⌒ 1007

## FIG.10

1110    ⌒1120    ⌒1130

Tx/
Rx

COMM. CONTR.

2L-LUT ⌒1121

MEM    1131

SW

1132

DB

1101

## FIG.11

⌒1222    ⌒1220

DU    CU

1110    1120    1120    MEM ⌒1130
CNTL    CNTL
TRX    PROG ⌒1131

## FIG.12

Europäisches
Patentamt

European
Patent Office

Office européen
des brevets

# EUROPEAN SEARCH REPORT

**Application Number**

EP 24 18 4709

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 768 572 A (GEORGE DAVID GLENN [US] ET AL) 16 June 1998 (1998-06-16) * figures 2,5,6,7,9 * * column 4, line 1 - line 5 * * column 5, line 51 - line 62 * * column 4, line 35 - line 65 * * column 2, line 25 - line 30 * * column 5, line 5 - line 20 * * column 6, line 15 - line 62 * ----- | 1-18 | INV. G06F9/48 G06F9/54 H04L69/28 |
| A | Kodancha Hariprasad: "Time Management in Partitioned Systems", Indian Institute of Science, 30 October 2007 (2007-10-30), pages 1-128, XP093228503, Retrieved from the Internet: URL:https://www.csa.iisc.ac.in/~gopi/docs/haripk-MSc.pdf#page=64.50 [retrieved on 2024-11-27] * the whole document * ----- | 1-18 | |

**TECHNICAL FIELDS SEARCHED (IPC)**

G06F
H04L

The present search report has been drawn up for all claims

| Place of search | Date of completion of the search | Examiner |
|---|---|---|
| The Hague | 27 November 2024 | Suzic, Bojan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 24 18 4709

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2024

| Patent document cited in search report | Publication date | Patent family member(s) | Publication date |
|---|---|---|---|
| US 5768572 A | 16-06-1998 | NONE | |

EPO FORM P0459